# EUROPEAN PATENT SPECIFICATION

(11) **EP 3 360 299 B1**
(45) Date of publication and mention of the grant of the patent: **25.11.2020**
(21) Application number: 16853182.0
(22) Date of filing: 07.10.2016
(51) Int. Cl.: H04L 29/02, G06F 17/00, G06F 3/14, H04L 29/06, H04L 29/08, G06F 40/106

(54) **METHODS AND SYSTEMS FOR SELECTIVELY SHARING CONTENT OVER A COMMUNICATION CONNECTION**
VERFAHREN UND SYSTEME ZUM SELEKTIVEN TEILEN VON INHALT ÜBER EINE KOMMUNIKATIONSVERBINDUNG
PROCÉDÉS ET SYSTÈMES DE PARTAGE SÉLECTIF DE CONTENU SUR UNE CONNEXION DE COMMUNICATION

(30) Priority: 07.10.2015 US 201562238346 P
(43) Date of publication of application: 15.08.2018
(73) Proprietor: Calgary Scientific Inc., Calgary, Alberta T2G 1M8 (CA)
(72) Inventor: VIGGERS, Kevin Douglas, Calgary, Alberta T3E 4S2 (CA); DOEHRING, Christian, Calgary, Alberta T2T 5C5 (CA); REARDON, Jonathan, Calgary, Alberta T2N 1C5 (CA); WIELEBNOWSKI, Jacek, Calgary, Alberta T3L 2E5 (CA); PIGAT, Daniel Angelo, Calgary, Alberta T2R 0P2 (CA)
(74) Representative: Bingham, Ian Mark
(86) International application number: PCT/IB2016/056017
(87) International publication number: WO 2017/060866

(56) References cited:
- US-A1- 2013 290 408
- US-A1- 2014 053 085
- US-A1- 2015 039 998
- Anonymous: "Voila Web Screenshot - Chrome Web Store", , 13 May 2013 (2013-05-13), XP055572887, Retrieved from the Internet: URL:https://chrome.google.com/webstore/det ail/voila-web-screenshot/fppjbihjmidhgfmac ekmdmkgppfcipbl?hl=en [retrieved on 2019-03-21]
- Https://plus.Google.Com/+samdutton/posts: "Screensharing with WebRTC - Google Web Updates", , 19 September 2015 (2015-09-19), XP055573351, Retrieved from the Internet: URL:http://web.archive.org/web/20150919235 419/https://developers.google.com/web/upda tes/2012/12/Screensharing-with-WebRTC [retrieved on 2019-03-22]

## Description

### BACKGROUND

Communication networks, such as peer-to-peer services may enable real-time communication (e.g., peer-to-peer conferencing) between user devices. For example, peer-to-peer services may allow a pair of user devices to establish a connection, and then, the user devices in a session may share content, e.g., media content such as audio, video, desktop screen scrapes, image libraries, etc., for example, over the communication connection. However, in a conventional peer-to-peer session, one peer is typically designated a "host" and other collaborator(s) are participant(s) in the session. The host controls what content is shared and the participant(s) see the shared content as it is displayed at the host. US2015/0039998 is directed to a client/server infrastructure in which a screen sharing server is used to exchange data among devices. The method requires the use of the centralized screen sharing server in order to share the content between the devices. A document with the title 'Voila Web Screenshot - Chrome Web Store, XP055572887, dated 13 May 2013, describes that the Voila Web Screenshot extension provides a simple and intuitive way of clipping and capturing web pages from a browser. A document with the title 'Screensharing with WebRTC - Google web updates, XP055573351, dated 19 September 2015, describes an experimental Chrome extension that uses RTCPeerConnection and Chrome.tabCapture to share a live video of a browser tab.

### SUMMARY

Methods and systems are provided herein for real-time, peer-to-peer communication within a collaborative session. Within the session, content, such as applications, multimedia, and other content is shared over a peer-to-peer connection between a Source and a Target that are each associated with a computing device.

The invention is defined by a method according to claim 1. Further embodiments are set out in the dependent claims.

### BRIEF DESCRIPTION OF THE DRAWINGS

The components in the drawings are not necessarily to scale relative to each other. Like reference numerals designate corresponding parts throughout the several views.
FIG. 1 illustrates a block diagram of an environment for selectively sharing content over a peer-to-peer connection;
FIG. 2 illustrates a flow diagram of example operations for selectively sharing content;
FIG. 3 illustrates an example environment where two computing devices each act as a Source connected by a peer-to-peer (P2P) connection.
FIG. 4 illustrates an example environment having plural Source computing devices and plural Target computing devices connected by P2P connections;
FIG. 5 illustrates an example "self-sharing" user interface where the Source and Target are a same computing device;
FIGS. 6A and 6B illustrate example Source and Target user interfaces, respectively;
FIGS. 7A and 7B illustrate example user interfaces where both collaborators' computing devices are each a Source and Target, as described with reference to FIG. 3; and
FIG. 8 is a block diagram illustrating an example computing device.

### DETAILED DESCRIPTION

Unless defined otherwise, all technical and scientific terms used herein have the same meaning as commonly understood by one of ordinary skill in the art. Methods and materials similar or equivalent to those described herein can be used in the practice or testing of the present disclosure. As used in the specification, and in the appended claims, the singular forms "a," "an," "the" include plural referents unless the context clearly dictates otherwise. The term "comprising" and variations thereof as used herein is used synonymously with the term "including" and variations thereof and are open, non-limiting terms.

### OVERVIEW

In accordance with aspects of the present disclosure, real time communication services are used to establish peer-to-peer connection (P2P) between computing devices to selectively share content, such as applications, data, and media. In accordance with the present disclosure, a source computing device (herein a "Source") and a target computing device (herein a "Target") are participants in a collaborative session associated with computing device(s) that are communicatively connected over, e.g., a P2P communication connection or a proxied connection. In the implementations described below, the Source and Target computing device(s) each have a browser that is aware of the other.

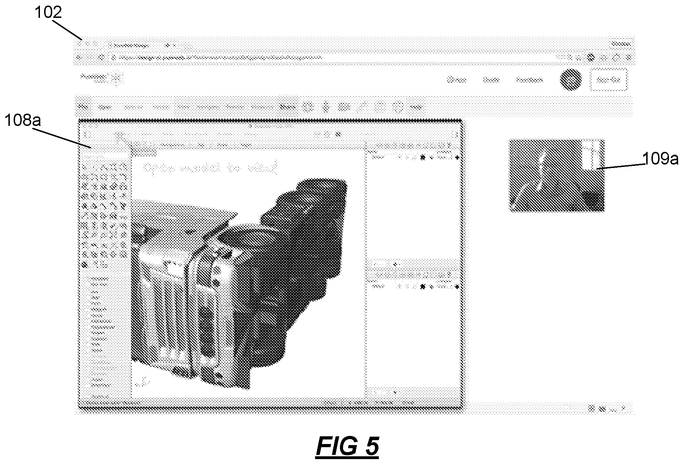

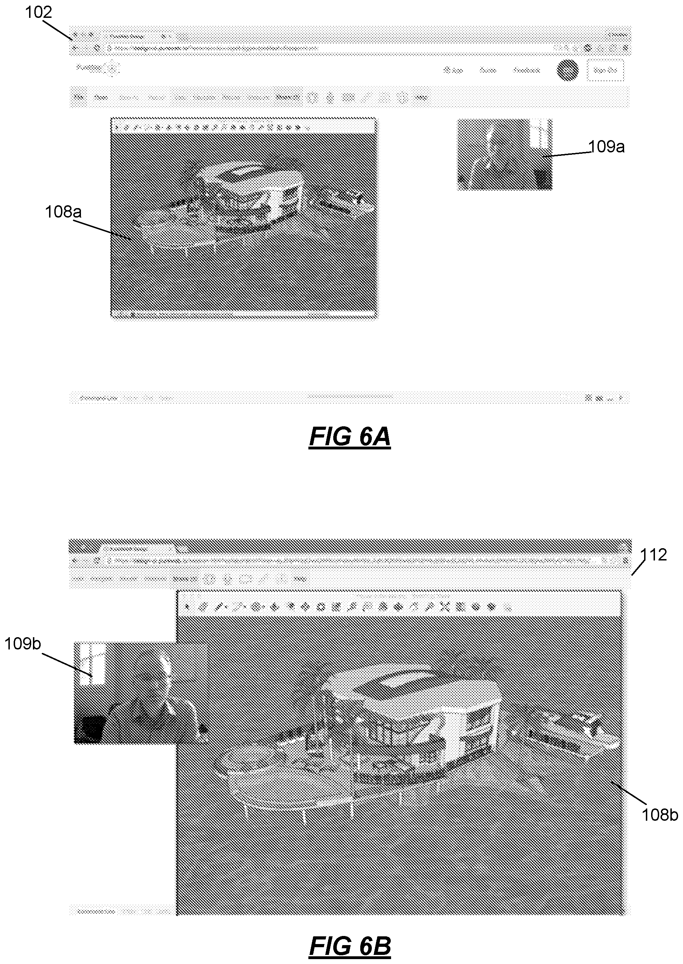

The Source has a browser screen sharing extension that allows access to local content on the Source computing device, such as, applications, audio and video. Examples of local content include, but are not limited to productivity applications such as WORD, EXCEL, POWERPOINT, CAD/CAM applications, gaming applications, medical imaging applications, video, audio, tabs, collaborative content and others. To share content, the Source may activate a Share button (e.g., "+App") to present a list of local content to share. The Source then makes a selection of the content, which in turn, makes the content available in a "view" at each participant browser. This process can be repeated to share more than one item of content. As will be described a "view" is an independent screen sharing area in which shared content is presented within a browser. Examples are shown in FIGS. 5, 6A, 6B, 7A and 7B. FIGS. 6A and 6B particularly show the above example.

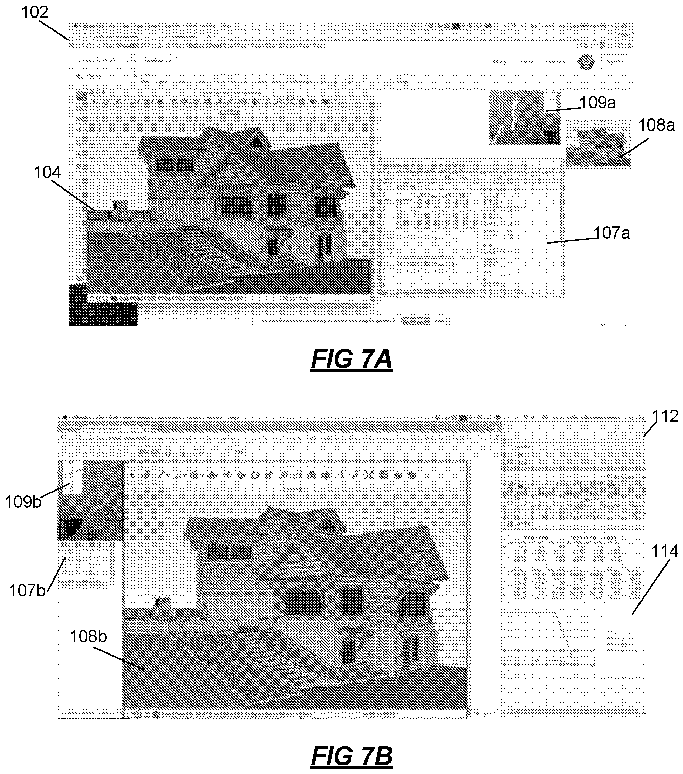

Both the Source and the Target can consume, but only the Source can broadcast content because the Source has the appropriate screen sharing browser extension. In other words, every participant is a Target, but when equipped with the browser screen sharing extension, the participant can also be a Source; this results in the ability to cross-share, as shown in FIGS. 7A and 7B. Further, the Source can be standalone, such that Source shares with itself, as shown in FIG. 5.

In an example implementation, the P2P connection may be provided using WebRTC with enabled browsers, such as Chrome, Firefox and Edge, to establish a connection therebetween. Using WebRTC, Application Programming Interfaces (APIs), audio and video streams, as well as other data may be synchronized between the devices. Further, as will be described, within the browser execution on each device, shared content may be uniquely displayed at each device in accordance with user preferences because the view is not bound to the Source. For example, if two devices are sharing POWERPOINT presentation, one device may show the presentation as a large window, whereas it may be a difference size on the other device. Still further, the sharing may be bi-directional where a first local application on a first device is shared with a second device and a second local application on a second device is shared with the first device. Here again, the windows associated with the first and second content may be resized for display at each device in accordance with each device user's own preferences.

### EXAMPLE ENVIRONMENT

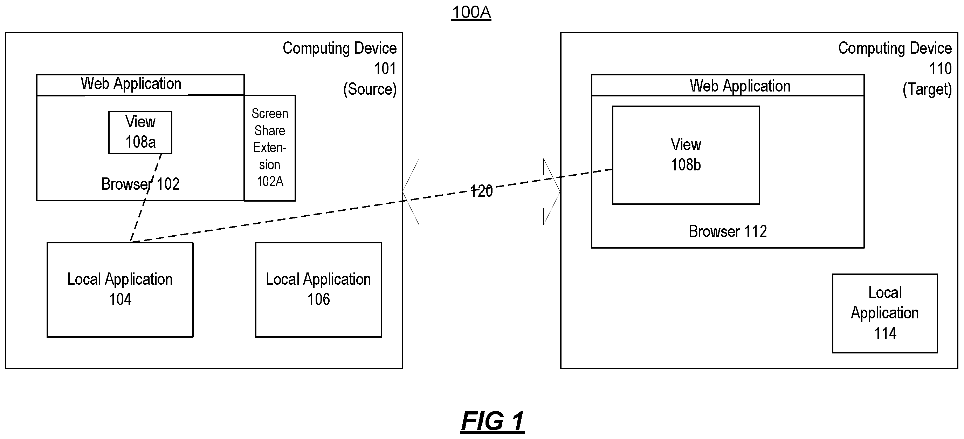

Referring now to FIG. 1, there is illustrated a block diagram of an environment 100A for selectively sharing content over a peer-to-peer connection. The environment 100A can include a computing device 101 (e.g., a Source), and a computing device 110 (e.g., a Target). The computing devices 101 and 110 may be referred to as "peer nodes," "client devices" and/or "user devices" herein. Further, within a communication connection 120 each device considers itself local (e.g., local peer) and all other devices as remote (e.g., remote peers). In some implementations, the communication connection 120 may be provided as a peer-to-peer connection, or a proxy connection through an intermediate computing device (e.g., a proxy server). It should be understood that the environment 100A is provided only as an example environment and that the environment 100A can include more or less components than as shown in FIG. 1.

Computing devices 101 and 110 may be any appropriate computing device connected via a communication network to each other using the communication connection 120, such as WebRTC. For example, computing devices 101 and 110 may each be wireless handheld devices such as, for example, a smart phone such as an IOS-based IPHONE, an ANDROID-based device, a WINDOWS phone, a desktop/notebook personal computer or a tablet computer. It is noted that the connections to the communication network may be any type of connection, for example, Ethernet, Wi-Fi (IEEE 802.11x), WiMax (IEEE 802.16), Ethernet, 3G, 4G, LTE, etc.

Computing devices 101 and 110 can execute a client application, such as a web browser 102 and 112, respectively, to enable user interaction for displaying data and/or imagery in a human comprehensible fashion, for example, in a graphical display and for determining user input data in dependence upon received user instructions. Each of the web browsers 102 and 112 may be enabled to communicate over the communication connection 120 using extensions, such as HTML5 extensions to share audio and video streams, as well as other applications, content and data. For example, as shown in FIG. 1, a screen share browser extension(s) 102A may enable the Source browser 102 to access local application 104 and share the local application 104 in an independent view 108a that is presented in the Source browser 102 (which is also a Target) and a corresponding independent view 108b that is presented in the Target browser 108.

As shown, the independent views 108a and 108b are "floating" views that may be independently sized and positioned within the browsers 102 and 112 by, e.g., a user, at each device 101. Further, a transparency of the views 108a and 108b may also be set independently at each device 101 and 110. In other words, the size, position and transparency of view 108a has no effect on view 108b, and vice versa. Yet further, a capture tool may be provided that enables a user capture the display of the view 108a and 108b. The capture tool, captures the graphical layer being displayed in the view 108a and 108b and may present a thumbnail of the captured graphical layer in a gallery. For example, a thumbnail of the captured graphical layer may be displayed in a gallery is displayed at the bottom of the view 108a and 108b. The graphical layer captured by the capture tool may be saved as an image file for later retrieval by an end user.

The communication connection 120 can include one or more APIs that provide capability for real-time, peer-to-peer communication over the communication network described above. The APIs can enable establishment/creation of peer-to-peer connections (e.g., using an offer-answer protocol), management of peer-to-peer connections and/or management of local resources such as webcams, microphones, etc. After establishing a peer-to-peer connection, media content including, but not limited to, audio, video, text, data, desktop screen scrapes and image libraries, can be shared in real-time over the peer-to-peer connection. For example, the media content can be captured by local media resources such as webcams, microphones, etc. of the computing devices 101 and 110 and shared via the communication connection 120.

One example communication connection 120 is a peer-to-peer frame work is WebRTC (available at http://webrtc.org). WebRTC includes a plurality of JavaScript APIs that integrate with HTML to provide capability for real-time, peer-to-peer communication over a computer network. For example, WebRTC includes an API ("getUserMedia") that provides access to local media resources, which allows the local media resources to be attached to local elements for display and/or communicated over a peer-to-peer connection. Additionally, WebRTC includes an API ("PeerConnection") that provides capability for managing a peer-to-peer connection between a pair of the computing devices. This API provides capability for negotiating sharing of media resources by managing transmission protocols, video/audio codecs, network address translation (NAT) traversal details, etc. This API provides an offer-answer protocol that defines information necessary to create a peer-to-peer connection. Using this API, media resources can be attached to remote elements for display. Further, WebRTC includes an API that provides a raw data channel for general purpose communications. It should be understood that WebRTC is only one example framework and that this disclosure contemplates implementations using similar frameworks. This present disclosure contemplates that peer-to-peer connections can be established between the computing devices 101 and 110 on-the-fly using a predetermined Uniform Resource Locator (URL) associated with the Source 101.

Each of the computing devices 101 and 110 may execute location applications 104, 106 and 114, such as aforementioned CAD/CAM applications, productivity applications, medical image applications, gaming applications, telephony, collaboration tools, etc. As these are non-limiting examples, any application may be executed locally on the computing devices 101 and 110 and shared in accordance with the present disclosure.

There are many possible non-limited uses of the environment 100A in accordance with the present disclosure as introduced above. For example, the environment 100A can enable a node participating in a collaborative session (e.g., collaboration around a remotely-accessed application) to discover one or more peer nodes. In addition, the environment 100A can enable establishment of peer-to-peer connections between one or more peer nodes participating in the collaborative session.

### EXAMPLE OPERATIONAL FLOW

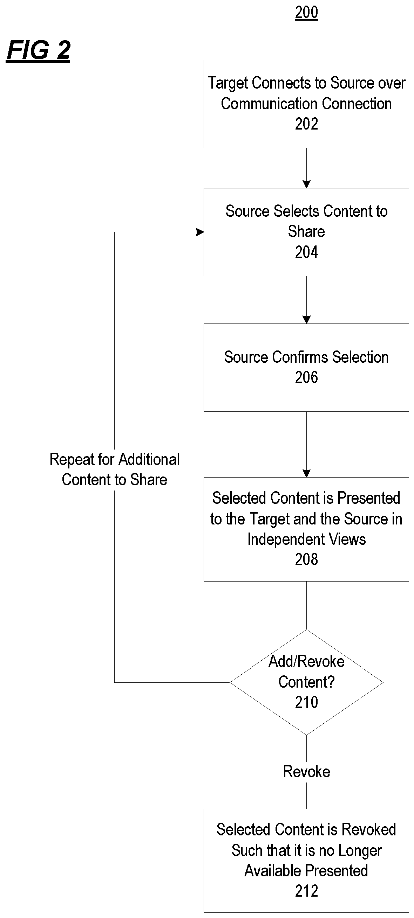

Referring now to FIG. 2, there is illustrated a flow diagram of example operations 200 for peer-to-peer application, data and media. At 202, the Target connects to the Source in a collaborative session. The Target may use the browser 112 to connect to the Source at a predetermined URL to establish communications therebetween over the P2P framework 120. The communications connection enables the screen share browser extension(s) 102A of the browser 102 to share content with the Target browser 112. Once connected, at 204, the Source may share a view of content with the Target. In an example, the Source has a browser screen sharing extension that allows access to content on the computing device 101 associated with the Source. Examples of local content include, but are not limited to productivity applications such as WORD, EXCEL, POWERPOINT, CAD/CAM applications, gaming applications, medical imaging applications, video, audio, tabs and others.

At 204, the Source may select a Share button to present a list of content to share. At 206, the Source then confirms the selection of the content to share in a view with the other collaborators. At 208, once content is confirmed, it is made available to all collaborators (Source and Targets) as an independent view. For example, the selected content may be presented in a view at each browser as an independent embedded floating view. For example, local application 104 may be shown in the view 108a on the Source, and in view 108b at the Target. Thus, in accordance with the operations at 204-208, the Source only shares content that is selected, not an entire desktop or screen area with the other collaborators.

At 210, it is determined if the independent view of the content is to be added or revoked. If content is to be added, the above processes 204-208 can be repeated to share more than one application. If content is removed, the Source may select the Share button (to present a list of shared content to remove. Upon a selection, the content is revoked such that it is no longer available to the Collaborators in the Collaborative Session.

In some implementations, awareness of the computing devices may be provided through a remote access framework, such as PUREWEB, available from Calgary Scientific, Calgary, Alberta, Canada. However, the use of a remote access framework is not required. For purposes of terminology herein, when a remote access framework is in use, the Source and Target may be referred to as a Host and Collaborator, respectively. Further, the browser may be executing within a remote access design.

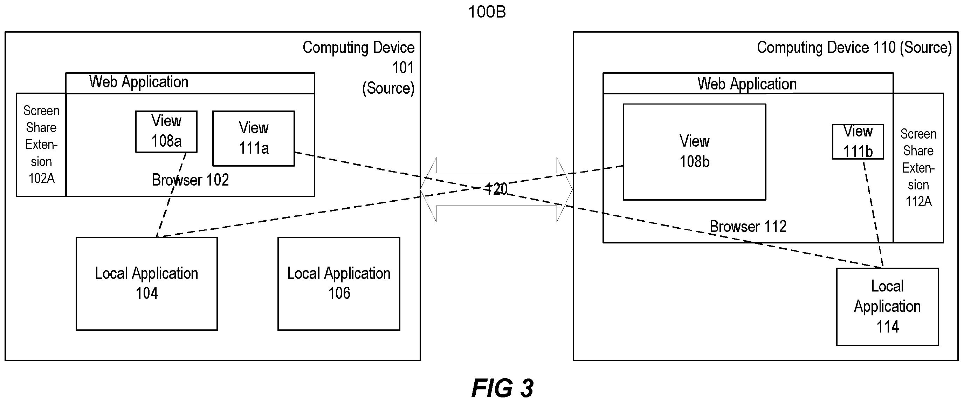

Referring now to FIG. 3, there is illustrated an example environment 100B where the computing device 101 and the computing device 110 each act as a Source (can broadcast and consume) connected by the P2P connection 120. In FIG. 3, computing device 101 acts as a Source to share local application 104 within the view 108a at the computing device 101 and view 108b at computing device 110. In particular, the browser 112 is provided with a screen share browser extension(s) 112A that functions similarly as the screen share browser extension(s) 102A. Also, computing device 110 acts as a Source to share local application 114 in view 111b at the computing device 110 and 111a at the computing device 101. Here again, the views 108a, 108b, 111a, 111b are each independent of each other and each have their own size, position and transparency within the browser 102 and browser 112, respectively.

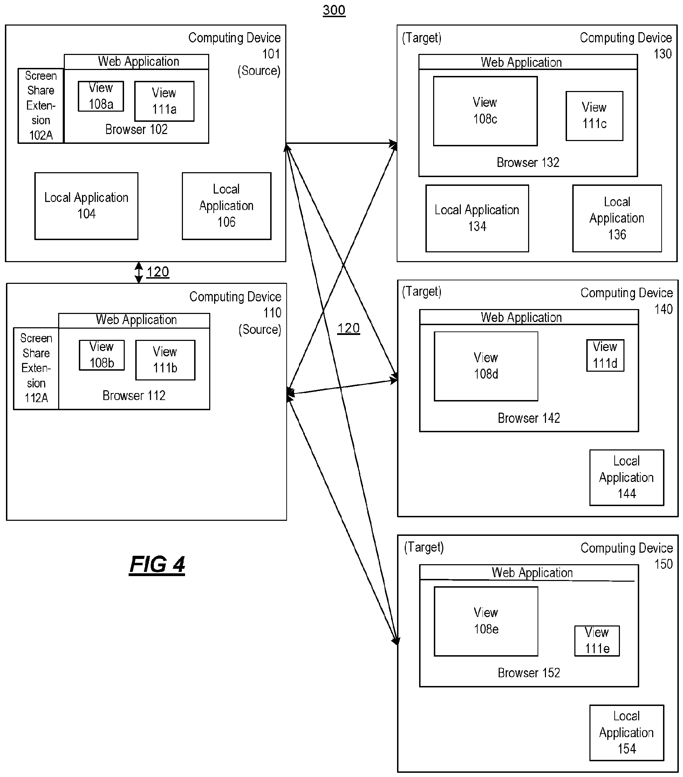

Referring now to FIG. 4, there is illustrated an example environment 300 wherein the computing device 101 and the computing device 110 each act as a Source and computing devices 130, 140 and 150 each act as a Target. Computing device 101 and the computing device 110 are connected by a first P2P connection 120. Browsers 102 and 112 each are provided with the screen share browser extension(s) 102A and 112A, respectively. The computing device 101 is connected by a second set of P2P connections 120 to computing device 130, computing device 140 and computing device 150. The computing device 110 is connected by a third set of P2P connections 120 to computing device 130, computing device 140 and computing device 150. In FIG. 4, computing device 101 acts as a Source to share local application 104 within the view 108a at the computing device 101, view 108b at computing device 110, view 108c at computing device 120, view 108d at computing device 140, and view 108e at computing device 130. Also, computing device 110 acts as a Source to share local application 114 in view 111b at the computing device 110, view 111a at the computing device 101, view 111c at the computing device 130, view 111d at the computing device 140, and view 111e at the computing device 150. Here again, the views 108a, 108b, 111a, 111b, 108c, 111c, 108d, 111d, 108e and 111e are each independent of each other and each have their own size, position and transparency within the browser 102, browser 112, browser 132, browser 142 and browser 152 respectively.

FIG. 5 illustrates an example "self-sharing" user interface where the Source and Target are the same computing device. The interface show in in FIG. 5 includes the browser 102 and two shared independent views 108a and 109a. The example view 108a is a CAD application, and the example view 109a is a video stream of a presenter operating, e.g., the computing device 101.

FIGS. 6A and 6B illustrate example Source and Target user interfaces, respectively. The Source user interface shown in FIG. 6A includes the browser 102 and two shared independent views 108a and 109a. The example view 108a is an image viewing application showing a house and boat, and the example view 109a is a video stream of a presenter operating the computing device 101. The Target user interface show in in FIG. 6B includes the browser 112 and two views 108b and 109b. The example view 108b is the image viewing application, and the example view 109b is the video stream of the presenter operating the computing device 101. As shown in FIGS. 6A and 6B, the relative sizes, positions and transparencies of the views are different.

FIGS. 7A and 7B illustrate example user interfaces where both collaborators' computing devices are each a Source and Target, as described with reference to FIG. 3. The user interface show in in FIG. 7A may be associated with computing device 101 and includes the browser 102 and three views, 107a, 108a and 109a. The example view 107a is an EXCEL spreadsheet, the example view 108a is an image viewing application showing a house, and the example view 109a is a video stream of a presenter operating the computing device 101. The view 108a of the image viewing application may be of the local application 104 executing on the computing device 101.

The Target user interface show in in FIG. 7B includes the browser 112 and three views, 107b, 108b and 109b. The example view 107b is the shared EXCEL spreadsheet, the example view 108b is the image viewing application, and the example view 109a is the video stream of the presenter operating the computing device 101. The view 107b of the EXCEL spreadsheet may be of the local application 114 executing on the computing device 110. As shown in FIGS. 7A and 7B, the relative sizes, positions and transparencies of the views are different.

Thus, as described above the present disclosure is directed to a P2P application, multimedia and data sharing method that provides substantial flexibility.

### EXAMPLE USE CASES

### Medical Imaging:

When accessing a medical image, a user can compare the image with a previous image from another application. A view of that application can be shared within a Source browser and in the browsers of other remote users so both can be seen together, including over top of each other semi-transparently.

### Design:

When opening a CAD model, a user can compare it with a previous version in another format (e.g. older file in CAD, PDF or other software). A view can be shared of the external application in the Source browser window and in the browsers of other remote users which can be resized, moved or made transparent to provide a convenient way to see and compare the two versions side by side (or on top).

### Cross Sharing:

In any industry, a Source user wants to show another user some information and compare it with the information they have. Because the application can be shared into a flexible view in a Source browser and in the browsers of other remote users, a version or application can be shared with the other users. In addition, the other users can share a view of their application(s) with the Source user and others. The views can be seen and customized by each participant in whatever configuration makes the most sense for them.

### Live Ink:

Each view is independent and can provide additional functionalities to a session associated with the view. The functionalities may be for the Source or shared with others. For example, a student may write notes/annotations from a shared presentation in a view, and the notes/annotations may be captured to a file and saved as a private or shared markup.

FIG. 6 shows an example computing environment in which example embodiments and aspects may be implemented. The computing system environment is only one example of a suitable computing environment and is not intended to suggest any limitation as to the scope of use or functionality.

Numerous other general purpose or special purpose computing system environments or configurations may be used. Examples of well-known computing systems, environments, and/or configurations that may be suitable for use include, but are not limited to, personal computers, server computers, handheld or laptop devices, multiprocessor systems, microprocessor-based systems, network personal computers (PCs), minicomputers, mainframe computers, embedded systems, distributed computing environments that include any of the above systems or devices, and the like.

Computer-executable instructions, such as program modules, being executed by a computer may be used. Generally, program modules include routines, programs, objects, components, data structures, etc. that perform particular tasks or implement particular abstract data types. Distributed computing environments may be used where tasks are performed by remote processing devices that are linked through a communication network or other data transmission medium. In a distributed computing environment, program modules and other data may be located in both local and remote computer storage media including memory storage devices.

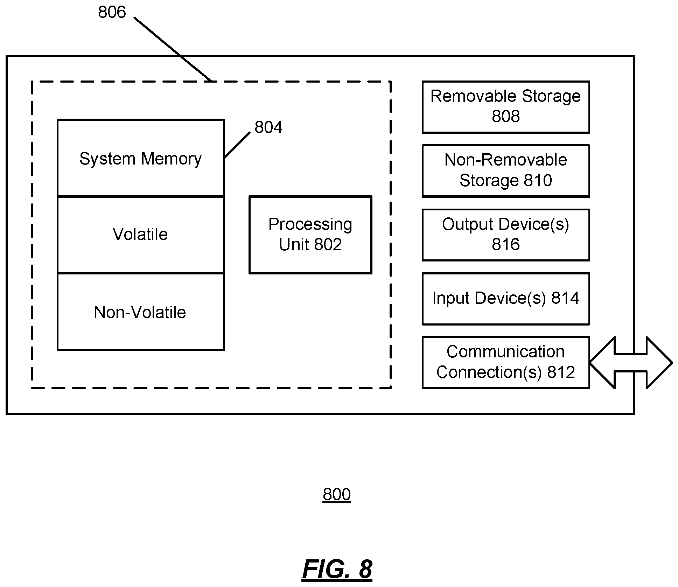

With reference to FIG. 8, an exemplary system for implementing aspects described herein includes a computing device, such as computing device 800. In its most basic configuration, computing device 800 typically includes at least one processing unit 802 and memory 804. Depending on the exact configuration and type of computing device, memory 804 may be volatile (such as random access memory (RAM)), non-volatile (such as read-only memory (ROM), flash memory, etc.), or some combination of the two. This most basic configuration is illustrated in FIG. 8 by dashed line 808.

Computing device 800 may have additional features/functionality. For example, computing device 800 may include additional storage (removable and/or non-removable) including, but not limited to, magnetic or optical disks or tape. Such additional storage is illustrated in FIG. 8 by removable storage 808 and non-removable storage 810.

Computing device 800 typically includes a variety of non-transitory computer readable media. Computer readable media can be any available media that can be accessed by device 800 and includes both volatile and non-volatile media, removable and non-removable media.

Computer storage media include volatile and non-volatile, and removable and non-removable media implemented in any method or technology for storage of information such as computer readable instructions, data structures, program modules or other data. Memory 804, removable storage 808, and non-removable storage 810 are all examples of computer storage media. Computer storage media include, but are not limited to, RAM, ROM, electrically erasable program read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 800. Any such computer storage media may be part of computing device 800.

Computing device 800 may contain communications connection(s) 812 that allow the device to communicate with other devices. Computing device 800 may also have input device(s) 814 such as a keyboard, mouse, pen, voice input device, touch input device, etc. Output device(s) 816 such as a display, speakers, printer, etc. may also be included. All these devices are well known in the art and need not be discussed at length here.

It should be understood that the various techniques described herein may be implemented in connection with hardware or software or, where appropriate, with a combination of both. Thus, the methods and apparatus of the presently disclosed subject matter, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the presently disclosed subject matter. In the case of program code execution on programmable computers, the computing device generally includes a processor, a storage medium readable by the processor (including volatile and non-volatile memory and/or storage elements), at least one input device, and at least one output device. One or more programs may implement or utilize the processes described in connection with the presently disclosed subject matter, e.g., through the use of an application programming interface (API), reusable controls, or the like. Such programs may be implemented in a high level procedural or object-oriented programming language to communicate with a computer system. However, the program(s) can be implemented in assembly or machine language, if desired. In any case, the language may be a compiled or interpreted language and it may be combined with hardware implementations.

## Claims

1. A method of selectively sharing content between a source computing device and a target computing device, comprising:
establishing a peer-to-peer connection between the source computing device and the target computing device;
launching a first browser at the source computing device;
receiving a selection of the content within the first browser;
broadcasting the content from the source computing device to the target computing device over the peer-to-peer connection using the first browser to provide the content to a second browser at the target computing device; and
presenting a first independent view of the content at the source computing device and a second independent view of the content at the target computing device, wherein the first independent view and the second independent view present the same content and are independently sized and positioned within the first browser and the second browser, respectively.

2. The method of claim 1, further comprising providing a share button at the source computing device to present a list of content to share.

3. The method of any of claims 1-2, wherein the first independent view and the second independent view are adapted to have an independent transparency.

4. The method of any of claims 1-3 wherein the source computing device and the target computing device are the same computing device, wherein the first browser and the second browser are the same browser, and wherein the first independent view and the second independent view are presented in the same browser.

5. The method of any of claims 1-4, wherein the target computing device additionally operates as a second source computing device and the source computing device additionally operates as a second target computing device, the method further comprising:
sharing second content at the second source computing device with the second target computing device;
confirming a selection of the second content at the second source computing device; and
making the second content available to the second target computing device in a third independent view presented at the first browser at the second target computing device.

6. The method of claim 5, further comprising presenting the second content in a fourth independent view at the second browser at the second source computing device.

7. The method of any of claims 5-6, wherein the third independent view and the fourth independent view each have an independent size, position and transparency.

8. The method of any of claims 1-7, further comprising:
capturing a first graphical layer displayed in the first independent view or a second graphical layer displayed in the second independent view using a capture tool provided at the first browser or the second browser, respectively; and
saving the captured first graphical layer or second graphical layer as an image file on the source computing device or target computing device, respectively.

9. The method of claim 8, further comprising presenting a thumbnail of the captured first graphical layer or the captured second graphical layer in a first gallery in the first browser or second gallery in the second browser, respectively.

10. The method of claim 1, further comprising managing resources of the source computing device or the target computing device over the peer-to-peer connection, wherein the resources comprise hardware components of the source computing device or the target computing device.

11. The method of claim 10, wherein the peer-to-peer connection is managed using WebRTC.

12. The method of any of claims 1-11, wherein the first independent view and/or the second independent view provide additional functionalities to a collaborative session between the source computing device and the target computing device.

13. The method of claim 12, further comprising capturing an image of the first independent view and/or the second independent to a file.

14. The method of any of claims 1-13, further comprising:
broadcasting the content from the source computing device to plural target computing devices to make the content available within a respective second browser at each of the plural target computing devices; and
presenting a respective second independent view of the content at each of the target computing devices, wherein the first independent view and each of the respective second independent views are independently sized and positioned within the first browser and each of the second browsers, respectively.

## Patentansprüche

1. Verfahren zum selektiven Teilen von Content zwischen einem Source-Computergerät und einem Target-Computergerät, umfassend:
Aufbauen einer Peer-to-Peer-Verbindung zwischen dem Source-Computergerät und dem Target-Computergerät;
Starten eines ersten Browsers in dem Source-Computergerät;
Empfangen einer Auswahl des Contents innerhalb des ersten Browsers;
Senden des Contents von dem Source-Computergerät zum Target-Computergerät über die Peer-to-Peer-Verbindung unter Verwenden des ersten Browsers zum Bereitstellen des Contents für einen zweiten Browser in dem Target-Computergerät; und
Anzeigen einer ersten unabhängigen Ansicht des Contents in dem Source-Computergerät und einer zweiten unabhängigen Ansicht des Contents in dem Target-Computergerät, wobei die erste unabhängige Ansicht und die zweite unabhängige Ansicht denselben Content aufweisen und innerhalb des ersten Browsers und des zweiten Browsers jeweils unabhängig bemessen und angeordnet sind.

2. Verfahren nach Anspruch 1, weiterhin umfassend das Bereitstellen einer Teilen-Schaltfläche in dem Source-Computergerät zum Anzeigen einer Liste des zu teilenden Contents.

3. Verfahren nach irgendeinem der Ansprüche 1-2, wobei die erste unabhängige Ansicht und die zweite unabhängige Ansicht geeignet sind, um eine unabhängige Transparenz aufzuweisen.

4. Verfahren nach irgendeinem der Ansprüche 1-3, wobei das Source-Computergerät und das Target-Computergerät dasselbe Computergerät sind, wobei der erste Browser und der zweite Browser derselbe Browser sind und wobei die erste unabhängige Ansicht und die zweite unabhängige Ansicht in demselben Computer angezeigt werden.

5. Verfahren nach irgendeinem der Ansprüche 1-4, wobei das Target-Computergerät zusätzlich als ein zweites Source-Computergerät arbeitet und das Source-Computergerät zusätzlich als ein zweites Target-Computergerät arbeitet, wobei das Verfahren weiterhin umfasst:
Teilen des zweiten Contents in dem zweiten Source-Computergerät mit dem zweiten Target-Computergerät;
Bestätigen einer Auswahl des zweiten Contents in dem zweiten Source-Computergerät; und
Verfügbarmachen des zweiten Contents für das zweite Target-Computergerät in einer dritten unabhängigen Ansicht, die in dem ersten Browser in dem zweiten Target-Computergerät angezeigt wird.

6. Verfahren nach Anspruch 5, weiterhin umfassend das Anzeigen des zweiten Contents in einer vierten unabhängigen Anzeige in dem zweiten Browser in dem zweiten Source-Computergerät.

7. Verfahren nach irgendeinem der Ansprüche 5-6, wobei die dritte unabhängige Ansicht und die vierte unabhängige Ansicht jeweils eine unabhängige Größe, Position und Transparenz aufweisen.

8. Verfahren nach irgendeinem der Ansprüche 1-7, weiterhin umfassend:
Erfassen einer ersten grafischen Schicht, die in der ersten unabhängigen Ansicht angezeigt wird, oder einer zweiten grafischen Schicht, die in der zweiten unabhängigen Ansicht angezeigt wird, unter Verwenden eines Erfassungswerkzeugs, das jeweils in dem ersten Browser oder dem zweiten Browser bereitgestellt wird; und
Abspeichern der erfassten ersten grafischen Schicht oder der zweiten grafischen Schicht als eine Bilddatei jeweils auf dem Source-Computergerät oder dem Target-Computergerät.

9. Verfahren nach Anspruch 8, weiterhin umfassend das Aufweisen eines kleinen Bildes der erfassten ersten grafischen Schicht oder der erfassten zweiten grafischen Schicht jeweils in einer ersten Galerie in dem ersten Browser oder einer zweiten Galerie in dem zweiten Browser.

10. Verfahren nach Anspruch 1, weiterhin umfassend das Verwalten von Ressourcen des Source-Computergeräts oder des Target-Computergeräts über die Peer-to-Peer-Verbindung, wobei die Ressourcen Hardware-Bauteile des Source-Computergeräts oder des Target-Computergeräts umfassen.

11. Verfahren nach Anspruch 10, wobei die Peer-to-Peer-Verbindung unter Verwenden von WebRTC verwaltet wird.

12. Verfahren nach irgendeinem der Ansprüche 1-11, wobei die erste unabhängige Ansicht und/oder die zweite unabhängige Ansicht zusätzliche Funktionalitäten zu einer gemeinschaftlichen Session zwischen dem Source-Computergerät und dem Target-Computergerät bereitstellen.

13. Verfahren nach Anspruch 12, weiterhin umfassend das Erfassen eines Bildes der ersten unabhängigen und/oder der zweiten unabhängigen Ansicht für eine Datei.

14. Verfahren nach irgendeinem der Ansprüche 1-13, weiterhin umfassend:
Senden des Contents von dem Source-Computergerät zu mehreren Target-Computergeräten, um den Content innerhalb eines jeweiligen zweiten Browsers in jedem der mehreren Target-Computergeräte verfügbar zu machen; und
Anzeigen einer jeweiligen unabhängigen zweiten Ansicht des Contents in jedem der Target-Computergeräte, wobei die erste unabhängige Ansicht und jede der jeweiligen zweiten unabhängigen Ansichten jeweils innerhalb des ersten Browsers und jedes der zweiten Browser unabhängig bemessen und angeordnet werden.

## Revendications

1. Procédé de partage sélectif de contenu entre un dispositif informatique source et un dispositif informatique cible, comprenant :
l'établissement d'une connexion pair à pair entre le dispositif informatique source et le dispositif informatique cible ;
le lancement d'un premier navigateur au niveau du dispositif informatique source ;
la réception d'une sélection du contenu dans le premier navigateur ;
la diffusion du contenu du dispositif informatique source au dispositif informatique cible sur la connexion pair à pair en utilisant le premier navigateur pour fournir le contenu à un second navigateur au niveau du dispositif informatique cible ; et
la présentation d'une première vue indépendante du contenu au niveau du dispositif informatique source et d'une deuxième vue indépendante du contenu au niveau du dispositif informatique cible, dans lequel la première vue indépendante et la deuxième vue indépendante présentent le même contenu et sont dimensionnées et positionnées indépendamment dans le premier navigateur et le second navigateur, respectivement.

2. Procédé selon la revendication 1, comprenant en outre la fourniture d'un bouton de partage au niveau du dispositif informatique source pour présenter une liste de contenu à partager.

3. Procédé selon l'une quelconque des revendications 1 à 2, dans lequel la première vue indépendante et la deuxième vue indépendante sont adaptées pour avoir une transparence indépendante.

4. Procédé selon l'une quelconque des revendications 1 à 3, dans lequel le dispositif informatique source et le dispositif informatique cible sont le même dispositif informatique, dans lequel le premier navigateur et le second navigateur sont le même navigateur, et dans lequel la première vue indépendante et la deuxième vue indépendante sont présentées dans le même navigateur.

5. Procédé selon l'une quelconque des revendications 1 à 4, dans lequel le dispositif informatique cible fonctionne additionnellement comme un second dispositif informatique source et le dispositif informatique source fonctionne additionnellement comme un second dispositif informatique cible, le procédé comprenant en outre :
le partage d'un second contenu au niveau du second dispositif informatique source avec le second dispositif informatique cible ;
la confirmation d'une sélection du second contenu au niveau du second dispositif informatique source ; et
la mise à disposition du second contenu pour le second dispositif informatique cible dans une troisième vue indépendante présentée au niveau du premier navigateur au niveau du second dispositif informatique cible.

6. Procédé selon la revendication 5, comprenant en outre la présentation du second contenu dans une quatrième vue indépendante au niveau du second navigateur au niveau du second dispositif informatique source.

7. Procédé selon l'une quelconque des revendications 5 à 6, dans lequel la troisième vue indépendante et la quatrième vue indépendante ont chacune une taille, une position et une transparence indépendantes.

8. Procédé selon l'une quelconque des revendications 1 à 7, comprenant en outre :
la capture d'une première couche graphique affichée dans la première vue indépendante ou d'une seconde couche graphique affichée dans la deuxième vue indépendante en utilisant un outil de capture fourni au niveau du premier navigateur ou du second navigateur, respectivement ; et
la sauvegarde de la première couche graphique ou de la seconde couche graphique capturée en tant que fichier image sur le dispositif informatique source ou le dispositif informatique cible, respectivement.

9. Procédé selon la revendication 8, comprenant en outre la présentation d'une imagette de la première couche graphique capturée ou de la seconde couche graphique capturée dans une première galerie dans le premier navigateur ou dans une seconde galerie dans le second navigateur, respectivement.

10. Procédé selon la revendication 1, comprenant en outre la gestion de ressources du dispositif informatique source ou du dispositif informatique cible sur la connexion pair à pair, dans lequel les ressources comprennent des composants matériels du dispositif informatique source ou du dispositif informatique cible.

11. Procédé selon la revendication 10, dans lequel la connexion pair à pair est gérée en utilisant WebRTC.

12. Procédé selon l'une quelconque des revendications 1 à 11, dans lequel la première vue indépendante et/ou la deuxième vue indépendante fournissent des fonctionnalités additionnelles à une session collaborative entre le dispositif informatique source et le dispositif informatique cible.

13. Procédé selon la revendication 12, comprenant en outre la capture d'une image de la première vue indépendante et/ou de la deuxième vue indépendante sur un fichier.

14. Procédé selon l'une quelconque des revendications 1 à 13, comprenant en outre :
la diffusion du contenu du dispositif informatique source à plusieurs dispositifs informatiques cibles pour mettre à disposition le contenu dans un second navigateur respectif au niveau de chacun des plusieurs dispositifs informatiques cibles ; et
la présentation d'une deuxième vue indépendante respective du contenu au niveau de chacun des dispositifs informatiques cibles, dans lequel la première vue indépendante et chacune des deuxièmes vues indépendantes respectives sont dimensionnées et positionnées indépendamment dans le premier navigateur et chacun des seconds navigateurs, respectivement.
